# EUROPÄISCHE PATENTSCHRIFT

(11) **EP 3 292 394 B1**
(45) Veröffentlichungstag und Bekanntmachung des Hinweises auf die Patenterteilung: **01.05.2019**
(21) Anmeldenummer: 16723961.5
(22) Anmeldetag: 03.05.2016
(51) Int. Cl.: G01N 21/37, G01N 21/3504, G01N 21/61

(54) **STRAHLUNGSDETEKTOR FÜR EINEN NICHTDISPERSIVEN INFRAROT-GASANALYSATOR**
RADIATION DETECTOR FOR A NON-DISPERSIVE INFRARED GAS ANALYZER
DÉTECTEUR DE RAYONNEMENT DESTINÉ À UN ANALYSEUR DE GAZ À INFRAROUGE NON DISPERSIF

(30) Priorität: 04.05.2015 DE 102015106915
(43) Veröffentlichungstag der Anmeldung: 14.03.2018
(73) Patentinhaber: Emerson Process Management GmbH & Co. OHG, 82234 Wessling (DE)
(72) Erfinder: SCHNEIDER, Rudolf, 63619 Bad Orb (DE); KNÖPKE, Leif, 63450 Hanau (DE); WINTER, Marc, 63526 Erlensee (DE); WOMBACHER, Erich, 63856 Bessenbach (DE)
(74) Vertreter: Haarpatent Patentanwälte Krämer Meyer
(86) Internationale Anmeldenummer: PCT/EP2016/059875
(87) Internationale Veröffentlichungsnummer: WO 2016/177720

(56) Entgegenhaltungen:
- FR-A- 1 429 813
- GB-A- 1 316 082
- JP-A- 2000 356 592
- JP-A- 2003 139 701

## Beschreibung

Die Erfindung betrifft einen Strahlungsdetektor für einen nichtdispersiven Infrarot-Gasanalysator, mit zwei von einem Gehäuse umgebenen und von einem für Infrarotstrahlung durchlässigen und für Gas undurchlässigen Trennelement getrennte Detektorkammern, die mit einem strahlungsabsorbierenden Messgas füllbar sind, einem an einer Anlagefläche an einer Außenseite des Gehäuses anbringbaren Aufnahmeelement und einem darin befestigten, einen strömungs- oder drucksensitiven Sensor umfassenden Messsystem, wobei jede Detektorkammer durch einen in dem Gehäuse verlaufenden gasoffenen Kanal mit dem Messsystem pneumatisch verbunden ist.

Strahlungsdetektoren der angegebenen Art sind aus der DE 195 40 072 B4 bekannt und Bestandteil eines nichtdispersiven Infrarot-Gasanalysators. Eine durch eine Strahlungs-Choppereinrichtung modulierte Infrarotstrahlung trifft entweder auf eine mit einem Messgas gefüllte oder auf eine parallel zu dieser angeordneten mit Inertgas gefüllten Küvette. Der Küvette nachgeschaltet ist der Detektor, der mit einer zu bestimmenden Gaskomponente gefüllt ist. Der Detektor besteht mindestens aus einer Detektorkammer, die mit einem druck- oder strömungsempfindlichen Sensor verbunden ist.

Um bestimmte korrosive Gase messen zu können, werden Detektoren aus Aluminium verwendet, wobei das Aluminium nach Bearbeitung eine sehr widerstandsfähige Aluminiumoxidschicht bildet, die beispielsweise durch eine Plasmapolymerisation erzeugt wird. Ein solcher Detektor ist aus der DE 10 2006 014 007 B3 bekannt.

Aus der DE 39 37 141 A1 ist ein nichtdispersiver Infrarot-Gasanalysator bekannt, bei dem eine mit einem Vergleichsgas gefüllte Küvette neben einer von einem Messgas durchströmten Küvette angeordnet ist. Von einem Blendenrad modulierte Lichtstrahlen eines Infrarotstrahlers durchdringen die jeweilige Küvette und einen ersten, im Strahlungsgang des Infrarotstrahlers angeordneten Strahlungsempfänger. Der Strahlungsempfänger umfasst zwei Kammern, die mit einem ersten zu bestimmenden Messgas befüllt sind. Die Kammern sind über eine gasleitende Leitung miteinander verbunden, in die ein druckempfindlicher Sensor, beispielsweise ein Membrankondensator, integriert ist. Durch die wellenlängenspezifische Absorption der sie durchdringenden Strahlung erwärmen sich die in den Kammern eingeschlossenen Gasmengen unterschiedlich, so dass eine Druckdifferenz entsteht, die von dem Sensor als Maß für die vorliegende Gaskonzentration messbar ist. Dem ersten Strahlungsempfänger kann ein zweiter Strahlungsempfänger nachgeschaltet sein, in dem eine zweite zu analysierende Messgasprobe vorliegt. Durch in dem ersten Strahlungsempfänger integrierte transparente Fenster treffen die Strahlen auf den zweiten Strahlungsempfänger, in dem wiederum die Konzentration der zweiten Messgasprobe bestimmbar ist. Zwischen den Strahlungsempfängern kann ein Strahlungsfilter angeordnet sein.

Ein weiterer nichtdispersiver Infrarot-Gasanalysator mit mehreren in Reihe hintereinander angeordneten Detektoren ist aus der DE 25 05 006 C3 bekannt.

Ferner offenbaren JP 2003 065 954 A, JP 2003 139 701 A, FR 1429813 A und GB 1316082 A einen Strahlungsdetektor für einen nichtdispersiven Infrarot-Gasanalysator, bei dem das Gehäuse zwei Kammern umfasst.

Nachteilig bei den offenbarten Infrarot-Gasanalysatoren ist, dass die Detektoren durch ein Herstellungsverfahren bereitgestellt werden, bei dem nur wenige Variationen, bzw. Anpassungen der Detektoren an eine bestimmte zu analysierende Gaskomponente möglich sind. Die wesentlichen Elemente der Detektoren, wie beispielsweise Detektorkammer oder Sensor, sind fest in den Detektor integriert und können nicht an unterschiedliche zu messende Gase angepasst werden. Eine flexible Änderung von Detektoren oder Kombination von unterschiedlich gestalteten Detektoren ist nicht möglich.

Der Erfindung liegt die Aufgabe zugrunde, einen Strahlungsdetektor bereitzustellen, der nicht die Nachteile der bekannten Strahlungsdetektoren aufweist und einfach herzustellen ist.

Die Aufgabe wird erfindungsgemäß durch einen Strahlungsdetektor mit den in Anspruch 1 angegebenen Merkmalen gelöst. Vorteilhafte Ausgestaltungen des Strahlungsdetektors sind in den Unteransprüchen angegeben.

Nach der Erfindung ist das Gehäuse des Strahlungsdetektors modular ausgestaltet und umfasst ein den Kanal, das Trennelement und das in dem Aufnahmeelement befestigte Messsystem umfassendes Grundelement und ein erstes und ein zweites, jeweils mit dem Grundelement verbindbares und jeweils eine Detektorkammer umschließendes Außenelement, wobei die Außenelemente im Strahlengang der Infrarotstrahlung liegende Öffnungen aufweisen und die Öffnungen mit einem strahlungsdurchlässigen Fenster gasdicht verschlossen sind, wobei das Aufnahmeelement, und das erste und das zweite Außenelement mit dem Grundelement gefügt sind. Das Grundelement und die Außenelemente können im Sinne der Erfindung als modulare Bauteile bezeichnet werden. Das Messgas bezeichnet erfindungsgemäß ein quantitativ mit dem Gasanalysator zu analysierendes Gasgemisch. Der modulare Aufbau des Strahlungsdetektors ermöglicht eine einfache und vor allem kostengünstige Anpassung des Detektors an den jeweilig gewünschten Verwendungszweck, beziehungsweise an die jeweilig zu bestimmende Messgaskomponente. Es wird ein Grundelement mit dem für die Messung benötigten Messsystem zur Verfügung gestellt, das gemäß des jeweiligen Verwendungszwecks um entsprechende Außenelemente ergänzt werden kann, die in Abhängigkeit zu der analysierenden Messgaskomponente ausgewählt werden.

Durch die modulare Bauweise ist es möglich, die Detektorkammern geometrisch unterschiedlich auszugestalten, ohne jedoch das Grundelement baulich verändern zu müssen. Die Außenelemente können in einer bevorzugten Ausgestaltung der Erfindung unterschiedlich lang ausgestaltet sein, so dass die Detektorkammern in axialer Richtung unterschiedliche Längen aufweisen. Es ist bekannt, dass eine unterschiedliche Absorption der Messgaskomponenten entweder durch unterschiedliche Absorptionskoeffizienten oder durch unterschiedliche Konzentrationen hervorgerufen sein kann. Gemäß dem Lambert-Beer'schen Gesetz ist die Absorption aber auch von der Kammerlänge abhängig. Je geringer der Wert des Produkts aus Absorptionskoeffizient, Konzentration und Kammerlänge ist, desto besser ist eine Linearität einer Absorptionskurve in Bezug auf sich ändernde Konzentrationen. Eine unterschiedliche Krümmung der Absorptionskurve für unterschiedliche Absorptionswerte führt dazu, dass sich eine Messkurve, nach der Messinstrumente in der Regel kalibriert werden, und eine tatsächliche Messkurve nicht immer decken. Es hat sich jedoch gezeigt, dass diese Verschiebung durch geeignete Wahl der Kammerlänge ausgeglichen werden kann. Die Erfindung gemäß der bevorzugten Ausgestaltung ermöglicht eine einfache Änderung der Kammerlängen, indem die Außenelemente entsprechend der zu analysierenden Messgase beziehungsweise Messgaskomponenten angepasst werden.

Nicht nur die Länge der Detektorkammer, sondern auch das Verhältnis der Detektorkammerlängen zueinander hat einen Einfluss auf eine Messqualität des Strahlungsdetektors. Das Verhältnis kann zum einen durch unterschiedliche Kammerlängen und zum anderen durch eine Veränderung einer Einbaulage des Trennelements im Grundelement verändert werden. Auch die Längen der Detektorkammern in axialer Richtung können durch die Veränderung der Einbaulage des Trennelements variiert werden, so dass eine Kammer im Vergleich zur anderen Kammer verkleinert oder vergrößert ist und das Verhältnis der Kammerlängen nicht 1:1 beträgt.

Die modulare Bauweise vereinfacht auch die Anordnung von mehreren Strahlungsdetektoren auf einer optischen Bank. Es können mehrere Strahlungsdetektoren koaxial hintereinander auf der optischen Bank im Strahlengang der Infrarotstrahlung angeordnet sein, um beispielsweise unterschiedliche Messgaskomponenten in dem Messgas zu bestimmen, wobei die Kammerlänge einzelner Detektoren an die jeweilige zu bestimmende Messgaskomponente angepasst werden kann. Hierdurch kann die Messqualität erheblich verbessert werden.

Um einen stabilen Verbund zwischen dem Aufnahmeelement und dem Messsystem zu erreichen, besteht das Aufnahmeelement in einer Ausgestaltung der Erfindung aus einem schweißfähigen Material, wobei das Messsystem in das Aufnahmeelement eingeschweißt wird. Durch einen Austausch des Aufnahmeelements mit dem eingeschweißten Messsystem kann der Strahlungsdetektor in einfacher Weise nachträglich repariert werden. Zudem kann die Funktionstüchtigkeit des Messsystems nach der Befestigung mit dem Aufnahmeelement und vor dem Einbau in das Grundelement geprüft werden, was zu einer Verbesserung der Ausbeute führt. Das Messsystem füllt das Aufnahmeelement vorteilhafterweise vollständig aus und die Detektorkammern sind jeweils über einen Kanal mit dem Messsystem pneumatisch verbunden. Das Aufnahmeelement mit dem eingeschweißten Messsystem ist insbesondere gasdicht mit dem Grundelement verbunden, wobei eine pneumatische Verbindung in Form des Kanal zwischen dem Messsystem und den Detektorkammern besteht und so jede Detektorkammer pneumatisch mit dem Messsystem verbunden ist. Das Aufnahmeelement kann hierfür eine radiale Bohrung aufweisen, die eine Verbindung zwischen dem Kanal in dem Grundelement und dem Messsystem herstellt. Der Kanal kann ebenfalls als radiale Bohrung in dem Grundelement ausgeführt sein.

Der Strahlungsdetektor kann Verbindungsbereiche, wie beispielsweise einen Flansch, aufweisen, die einen nachträglichen Einbau des Detektors in bestehende Infrarot-Gasanalysatoren ermöglichen. Hierdurch kann der Strahlungsdetektor mittels einer Kleinflanschtechnik in Infrarot-Gasanalysatoren eingebunden werden. Die modularen Bauteile können ebenfalls Verbindungsbereiche aufweisen, über die die Bauteile miteinander gefügt werden können. Es ist bevorzugt, dass das Aufnahmeelement und das erste und das zweite Außenelement mit dem Grundelement durch Kleben, Schweißen oder Löten gefügt sind. Durch die modulare Bauweise des Strahlungsdetektors kann das Fügeverfahren je nach Material der modularen Bauteile, je nach Einsatzzweck des Strahlungsdetektors oder in Abhängigkeit von weiteren, in den Strahlungsdetektor integrierte Bauteile variiert werden.

Der Strahlungsdetektor, das heißt die modularen Bauteile, können aus einem Metall oder einer Legierung, wie beispielsweise Edelstahl, hergestellt sein. In einer weiteren Ausgestaltung der Erfindung bestehen das Grundelement, das erste Außenelement und/oder das zweite Außenelement aus Aluminium. Ein Vorteil der bevorzugten Ausgestaltung ist, dass die modularen Bauteile nicht miteinander verschweißt werden müssen, was den Herstellungsprozess wesentlich vereinfacht. Außerdem kann auf eine Oberflächenbehandlung der Detektorkammern verzichtet werden, wobei es in Abhängigkeit von dem jeweiligen Messgas vorteilhaft sein kann, eine Oberflächenbehandlung durchzuführen, um eine Langzeitstabilität des Strahlungsdetektors sicherzustellen, wenn der Strahlungsdetektor für die Analyse von aggressiven Gasen genutzt wird.

Nach der Erfindung wird vorgeschlagen, dass die aus Aluminium bestehenden modularen Bauteile miteinander durch Löten oder Kleben gefügt sind, das heißt das Aufnahmeelement und das erste und das zweite Außenelement sind mit dem Grundelement durch Kleben oder Löten gefügt. Hierdurch können nicht nur die beim Schweißen entstehenden hohen Temperaturen vermieden, sondern auch die Herstellung des Strahlungsdetektors einfacher und kostengünstiger gestaltet werden.

Ferner ist es vorteilhaft, wenn an dem Trennelement oder einem strahlungsdurchlässigen Fenster ein im Strahlengang der Infrarotstrahlung liegender optischer Filter angebracht ist. Als optischer Filter kann beispielsweise ein Interferenzfilter, ein Absorptionsfilter oder ein Transmissionsfilter eingesetzt werden. Aufgrund der beim Kleben auftretenden niedrigeren Temperaturen als beim Schweißen, kann der optische Filter bereits während der Montage des Strahlungsdetektors an dem Trennelement oder an einem der in den Außenelementen verbauten strahlungsdurchlässigen Fenster angebracht werden. Der optische Filter kann Querempfindlichkeiten reduzieren, die gegebenenfalls durch Gaskomponenten in dem Messgas verursacht werden.

Ferner wird vorgeschlagen, zusätzlich oder ergänzend zu dem optischen Filter einen Gasfilter zu verwenden, um die Querempfindlichkeiten zu reduzieren. Hierfür kann zumindest ein Außenelement eine im Strahlengang der Infrarotstrahlung liegende und von den Detektorkammern gasdicht getrennte Filterkammer aufweisen, die mit einem Filtergas gefüllt ist. Ein Vorteil des Gasfilters ist, dass er applikationsspezifisch mit Filtergas gefüllt werden kann. Das Filtergas kann gegebenenfalls noch an die jeweilige Verwendung angepasst werden. Durch den Gasfilter kann wellenlängenspezifisch Licht aus der Infrarotstrahlung absorbiert werden.

Nach der Erfindung wird vorgeschlagen, dass das Trennelement als Infrarotstrahlung durchlässiges und für Gas undurchlässiges Fenster ausgestaltet ist. Das Trennelement kann beispielsweise aus Calciumfluorid oder Bariumfluorid hergestellt und durch Kleben, Schweißen oder Löten in das Grundelement integriert sein. Es kann vorteilhaft sein, wenn das Trennelement mit dem Grundelement und die Fenster mit den Außenelementen über einen Zwischenrahmen gasdicht verbunden sind. Der Zwischenrahmen kann über ein Glaslot gasdicht verschlossen sein.

Der erfindungsgemäße Strahlungsdetektor kann in einer Ausgestaltung für Infrarotstrahlung nicht durchstrahlbar ausgestaltet sein, indem mindestens ein Fenster ein mit einer strahlungsreflektierenden Schicht oder ein mit einer strahlungsreflektierenden Scheibe versehenes Fenster ist.

Gemäß der Erfindung ist ferner vorgesehen, einen nichtdispersiven Infrarot-Gasanalysator bereitzustellen, der einen beschriebenen Strahlungsdetektor umfasst, wobei mindestens ein weiterer Strahlungsdetektor hinter dem ersten Strahlungsdetektor angeordnet ist, der mit dem gleichen oder einem weiteren Messgas gefüllt ist. Es können auf einer optischen Bank mehrere Strahlungsdetektoren koaxial hintereinander angeordnet sein und durch infrarotstrahlungsdurchlässige Fenster in den Detektoren sichergestellt werden, dass die Infrarotstrahlung die hintereinander angeordneten Detektoren entsprechend durchstrahlt. Durch diese Anordnung können mehrere Messgaskomponenten in einem Messgas detektiert und durch eine entsprechende Küvettenauswahl die Konzentration bestimmt werden. Auch die Detektion von stark und schwach absorbierenden Messgaskomponenten ist durch den bevorzugten nichtdispersiven Infrarot-Gasanalysator möglich. Vorteilhafterweise wirkt ein Strahlungsdetektor für den nachgeschalteten Strahlungsdetektor als Gasfilter, da Infrarotstrahlung wellenlängenspezifisch von dem in dem Detektor gefüllten Messgas absorbiert wird. Um die Anfälligkeit für Querempfindlichkeiten weiter zu reduzieren, kann vorgesehen sein, dass zwischen dem ersten und dem weiteren Strahlungsdetektor ein optischer Filter angeordnet ist.

Die Erfindung wird nachfolgend anhand von Ausführungsbeispielen der Erfindung näher erläutert, die in der Zeichnung dargestellt sind. Es zeigen
- Figur 1: einen Querschnitt durch ein Gehäuse eines Strahlungsdetektors,
- Figur 2: einen Querschnitt durch ein Gehäuse eines Strahlungsdetektors mit einem optischen Filter,
- Figur 3: einen Querschnitt durch ein Gehäuse eines Strahlungsdetektors mit einem Gasfilter,
- Figur 4: einen Querschnitt durch ein Gehäuse eines Strahlungsdetektors mit unterschiedlich lang ausgestalteten Außenelementen,
- Figur 5: einen Querschnitt durch ein Gehäuse eines Strahlungsdetektors mit unterschiedliche lang ausgestalteten Detektorkammern und
- Figur 6: eine Mehrfachanordnung von Strahlungsdetektoren.

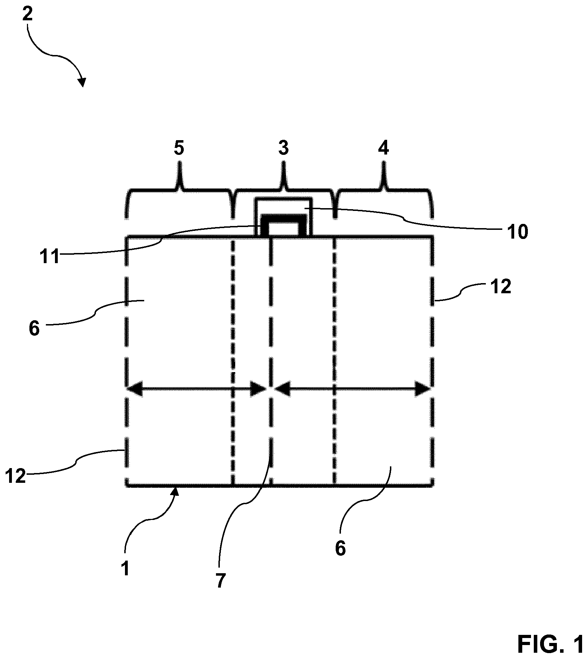

Das Gehäuse 1 des in Figur 1 dargestellten Strahlungsdetektors 2 ist modular aufgebaut und besteht aus einem Grundelement 3 und einem ersten und einem zweiten Außenelement 4, 5, wobei die Außenelemente 4, 5 in Abhängigkeit eines Einbaus in einen Infrarot-Gasanalysators als vorderes Außenelement 4 und hinteres Außenelement 5 angesehen werden können. Das Grundelement 3 und die Außenelemente 4, 5 können als modulare Bauteile bezeichnet werden. Das Grundelement 3 und die Außenelemente 4, 5 bilden zwei Detektorkammern 6, die durch ein für Infrarotstrahlung durchlässiges und für Gas undurchlässiges Trennelement 7 getrennt sind. Das Trennelement 7 kann als für Infrarotstrahlung durchlässiges und für Gas undurchlässiges Fenster ausgestaltet und beispielsweise in einer nicht dargestellten Ausnehmung im Grundelement angeordnet sein.

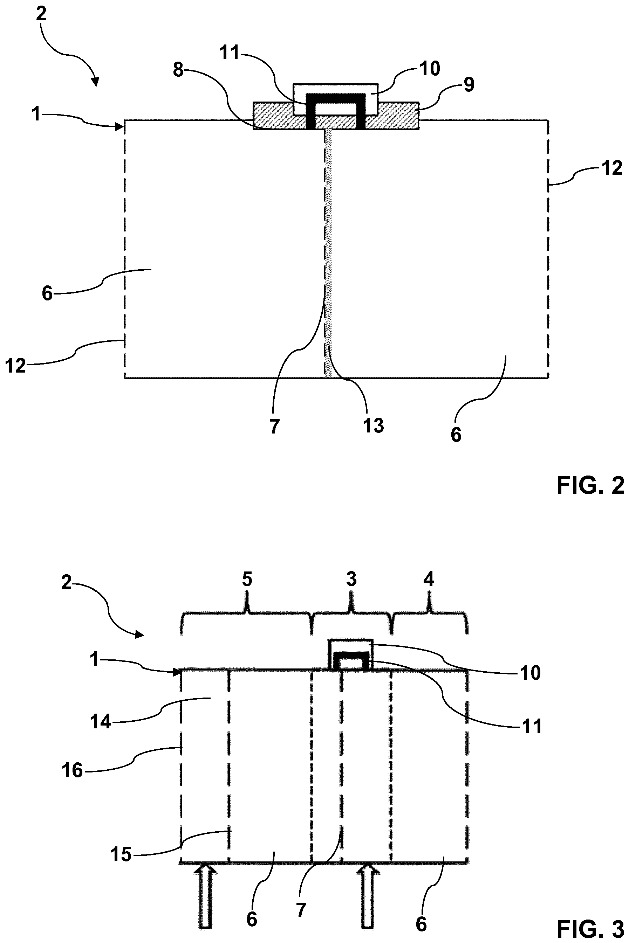

Wie in Figur 2 gezeigt, weist das Grundelement 3 auf seiner Oberseite eine Anlagefläche 8 auf, die beispielsweise durch eine Stufe oder eine Ausnehmung gebildet sein kann. An der Anlagefläche 8 kann ein Aufnahmeelement 9 zur Aufnahme eines einen strömungs- oder drucksensitiven Sensor umfassenden Messsystems 10 befestigt werden. Jede Detektorkammer 9 ist durch einen in dem Gehäuse 1, genauer dem Grundelement 3, verlaufenden gasoffenen Kanal 11 mit dem Aufnahmeelement 9, beziehungsweise mit dem Messsystem 10 pneumatisch verbunden. Der Kanal 11 kann als radiale Bohrung in das Grundelement 3 eingebracht sein.

Das Aufnahmeelement 9 besteht aus einem schweißfähigen Material, wie beispielsweise der Legierung Kovar, die sich aus Eisen, Nickel und Cobalt zusammensetzt. Das Messsystem 10 wird in das Aufnahmeelement 9 eingeschweißt, wobei das Messsystem 10 derart in dem Aufnahmeelement 9 befestigt wird, dass eine gasoffene Verbindung mit dem Kanal 11 und entsprechend den Detektorkammern 6 besteht. Der Kanal 11 verläuft möglichst gradlinig von den Detektorkammern 6 zu dem Messsystem 10, um so einen möglichst großen Messeffekt zu erzielen. Damit der Messeffekt nicht durch unterschiedliche Kanalgeometrien beeinflusst wird, sind die jeweils in den Detektorkammern 6 mündende Kanäle 11, die jeweils eine Detektorkammer 6 mit dem Messsystem 10 pneumatisch verbinden, in geometrisch gleicher oder zumindest ähnlicher Form ausgeführt.

Die Außenelemente 4, 5 sind beidseitig und koaxial zu dem Grundelement 3 angeordnet und umschließen jeweils eine Detektorkammer 6. Das heißt, die Detektorkammern 6 werden jeweils von einem Außenelement 4, 5 und dem Grundelement 3 gebildet. Die Außenelemente 4, 5 weisen im Strahlengang der Infrarotstrahlung liegende Öffnungen auf, wobei die Öffnungen mit einem strahlungsdurchlässigen Fenster 12 gasdicht verschlossen sind. Auch das Trennelement 7 kann als für Infrarotstrahlung durchlässiges und für Gas undurchlässiges Fenster ausgestaltet sein.

Die Fenster 12 und das Trennelement 7 können beispielsweise aus Calciumfluorid hergestellt sein. Falls die Fenster 12 nicht direkt mit einem Fügeverfahren in die Öffnungen gasdicht eingebracht werden, können die Fenster 12 und entsprechend das als Fenster ausgestaltete Trennelement 7 über einen nicht in der Zeichnung dargestellten, ringförmigen Zwischenrahmen mit den Außenelementen 4, 5 beziehungsweise dem Grundelement 3 verbunden werden. Der Zwischenrahmen kann aus einer Aluminium-, Gold- oder Silberlegierung hergestellt sein. Die erforderliche gasdichte Abdichtung der Fenster 12 mit dem Zwischenrahmen kann durch eine thermische Abdichtung mit Glaslot erreicht werden. Die Detektorkammern 6 können somit durch die Fenster 12 und das Trennelement 7 infrarote Strahlung empfangen.

Das Grundelement 3 und die Außenelemente 4, 5 weisen nicht dargestellte Verbindungsbereiche auf, die beispielweise als ringförmige Anlageflächen, Stufen oder Flansche ausgestaltet sein können und eine Verbindung des Grundelements 3 mit dem ersten und dem zweiten Außenelement 4, 5 ermöglichen. Das Aufnahmeelement 9 und das erste und das zweite Außenelement 4, 5 sind mit dem Grundelement durch Kleben, Schweißen oder Löten gasdicht gefügt. Beispielsweise können die Außenelemente 4, 5 durch eine Schweißnaht an ihrem Umfang gasdicht mit dem Grundelement 3 verschweißt sein. Das Aufnahmeelement 9 wird an der Anlagefläche 8 des Grundelements 3 an der Außenseite des Gehäuses angebracht und kann mit dem Grundelement 3 durch Kleben oder Löten gefügt sein. Hierdurch ist ein modularer Aufbau des Strahlendetektors 2 möglich, der an verschiedenartige Anwendungsfälle angepasst werden kann. Zudem kann das Messsystem 10 nach der Befestigung in dem Aufnahmeelement 9 und vor dem Einbau in den Strahlungsdetektor 2 auf Funktionsfähigkeit hin geprüft werden. Ein leichter Austausch des Messsystems 10 ist auch im Falle eines Funktionsverlusts möglich.

Für die Messung einer Gaskomponente in einem Messgas kann das Messgas mithilfe eines nicht in den Figuren gezeigten Füllstutzens in die Detektorkammern 6 eingebracht werden, wobei die Detektorkammern 6 durch das strahlungsdurchlässige Trennelement 7 getrennt sind. Die Infrarotstrahlung wird von dem Messgas in den zwei hintereinander liegenden Detektorkammern 6 absorbiert, wobei sich die Messgase durch eine unterschiedliche Absorptionsleistung unterschiedlich erwärmen und es so zu einer Druckdifferenz in den Detektorkammern 6 kommt. Die Druckdifferenz kann durch das in dem die beiden Detektorkammern 6 pneumatisch miteinander verbindenden Kanal 11 eingekoppelte und einen strömungs- oder drucksensitiven Sensor umfassende Messsystem 10 zu einem Messsignal umgewandelt werden.

In dem Strahlungsdetektor kann, wie in Figur 2 gezeigt, ein an dem Trennelement 7 und im Strahlengang der Infrarotstrahlung liegender optischer Filter 13 angeordnet sein. Der optische Filter 13 kann auch an einem in den Außenelementen 4, 5 angeordneten Fenstern 12 angeklebt sein. Optische Filter 13 zur Reduzierung von Querempfindlichkeiten sind nur bis zu einer bestimmten Temperatur stabil, so dass sie in der Regel nicht vor der Fertigstellung eines Strahlungsdetektors in diesen eingebracht werden können. Der erfindungsgemäße Strahlungsdetektor 2, das heißt das Grundelement 3 und die Außenelemente 4, 5, können aus Aluminium hergestellt sein. Das erste und das zweite Außenelement 4, 5 können dann mit dem Grundelement 3 durch Kleben gefügt sein. Bevorzugte Klebstoffe werden bei geeigneter Temperatur ausgehärtet, so dass die Funktionsfähigkeit des bereits montierten optischen Filters durch die Temperatur nicht beeinträchtigt wird.

Als Lötverfahren ist ein ColdBraze-Verfahren bevorzugt, welches auf Flussmittel vollständig verzichtet und bei dem die Werkstoffe direkt von gegebenenfalls vorhandenen Oxiden befreit werden, so dass eine homogene Lötstelle entsteht.

Falls der Strahlungsdetektor 2 aus Aluminium gefertigt ist, wird lediglich das Messsystem 10 durch Schweißen in das aus einem schweißfähigen Material bestehende Aufnahmeelement 9 eingebracht. Das Aufnahmeelement 9 mit dem aufgenommenen Messsystem 10 kann ebenfalls durch Kleben oder Löten mit dem Grundelement verbunden sein.

Auftretende und durch eine in dem Messgas vorhandene Nebenkomponente verursachte Querempfindlichkeiten können auch durch einen in Figur 3 gezeigten Gasfilter minimiert werden. Auch hier umfasst das Gehäuse 1 des Strahlungsdetektors 2 Detektorkammern 6, die durch das infrarotdurchlässige Trennelement 7 getrennt und von jeweils dem ersten und dem zweiten Außenelement 4, 5 umschlossen sind. Mindestens ein Außenelement 4, 5 weist eine im Strahlengang der Infrarotstrahlung liegende und von der Detektorkammer 6 gasdicht getrennte Filterkammer 14 auf, die mit einem infrarotaktiven Filtergas gefüllt ist und so als Gasfilter fungiert. Die Filterkammer 14 liegt als von der Detektorkammer 6 gasdicht getrennte Kammer vor, die beispielsweise von einer zusätzlichen infrarotdurchlässigen und gasundurchlässige Trennwand 15 und einer Außenwand 16 des Außenelements 5 gebildet ist. Die Außenwand 16 kann als Fenster 12 ausgestaltet sein. Die Trennwand 15 kann durch Kleben, Schweißen oder Löten in das Außenelement 5 gefügt sein. Das Filtergas kann je nach Verwendungszweck des Strahlungsdetektors 2 in die Filterkammer 14 und das Messgas in die Detektorkammern 6 über einen in der Figur 3 als Richtungspfeil dargestellten Anschluss oder Einfüllstutzen eingefüllt werden. Der Gasfilter ist insbesondere dann von Vorteil, wenn Strahlungsdetektoren 2 in einer Mehrfachanordnung vorliegen und beispielsweise auf einer optischen Bank eingesetzt werden. Der Gasfilter filtert eine einfallende Strahlung für den nachfolgenden Strahlungsdetektor, so dass gegebenenfalls auftretende Querempfindlichkeiten minimiert werden.

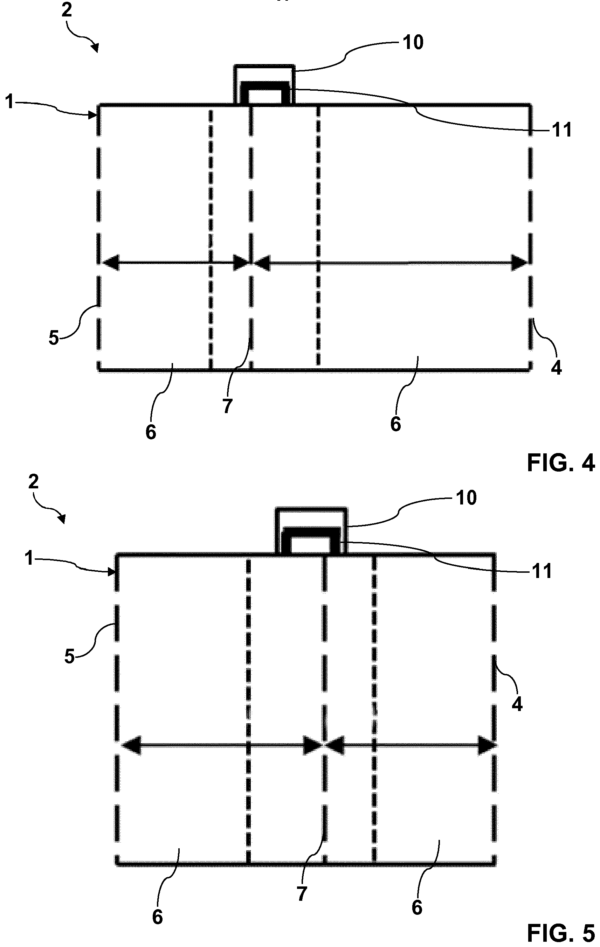

Die Figuren 4 und 5 zeigen einen Strahlungsdetektor 2 mit einem Gehäuse 1 und einem Grundelement 3, welches ein Messsystem 10 und einen die Detektorkammern 6 mit dem Messsystem verbindenden Kanal 11 aufweist, wobei mindestens eine Detektorkammer 6 in axialer Richtung verlängert ist. In Figur 4 wird dies durch eine axiale Verlängerung eines Außenelements 4 erreicht, wohingegen bei Figur 5 eine Einbaulage oder Einbauposition des Trennelements 7 im Grundelement 3 des Strahlungsdetektors 2 geändert ist. Die jeweiligen Kammerlängen werden durch die Begrenzungspfeile in den Figuren 4 und 5 illustriert. Die Detektorkammern 6 weisen eine unterschiedliche Länge und folglich verschieden aufnehmbare Gasvolumen auf. Die Kammerlängen und auch das Verhältnis der Kammerlängen zueinander führen dazu, dass der Strahlungsdetektor 2 eine gute Linearität und ein verbessertes Signal-Rausch-Verhältnis aufweist, wodurch die Qualität der Messung erheblich verbessert wird.

Für eine Einzelanordnung der Strahlungsdetektoren 2 kann mindestens ein Fenster 12 ein mit einer strahlungsreflektierenden Schicht oder ein mit einer strahlungsreflektierenden Scheibe versehenes Fenster 12 sein, so dass eine Erhöhung der Strahlungswirksamkeit erreicht wird. Auch die Wandflächen der Detektorkammern können eine strahlungsreflektierende Oberfläche oder Beschichtung aufweisen.

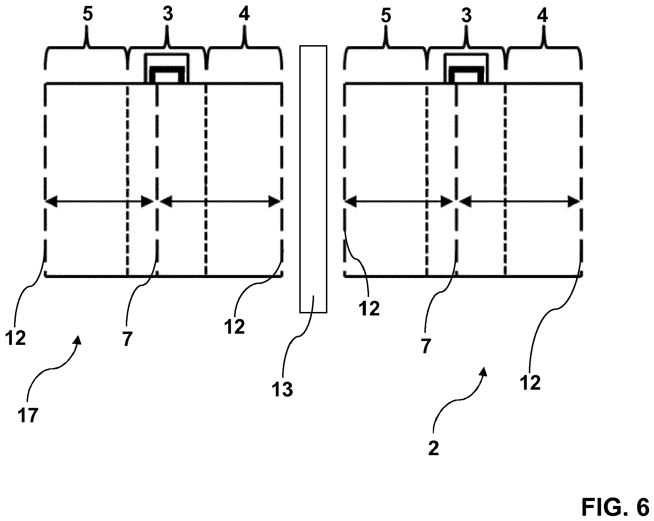

Wie in Figur 6 gezeigt, können Strahlungsdetektoren 2 mit dem Grundelement 3 und den Außenelementen 4, 5 aufgrund ihrer modularen Bauweise auch als Mehrfachanordnung hintereinander eingesetzt werden. Für die Mehrfachanordnung ist mindestens ein weiterer Strahlungsdetektor 17 koaxial hinter dem ersten Strahlungsdetektor 2 angeordnet, der mit dem gleichen oder einem weiteren Messgas gefüllt ist. Zwischen dem ersten und dem weiteren Strahlungsdetektor 2, 17 kann ein optischer Filter 13 oder ein Gasfilter angeordnet sein. Durch die Mehrfachanordnung ist eine simultane Detektion mehrerer Gaskomponenten in einer Messgasprobe möglich. Die Infrarotstrahlung trifft auf den ersten Strahlungsdetektor 2 mit infrarotdurchlässigen Fenstern 12 und die hindurchtretenden Strahlen auf den weiteren Strahlungsempfänger 17, der koaxial hinter dem ersten Strahlungsempfänger 2 angeordnet ist. Im Strahlengang zwischen den beiden Strahlungsdetektoren 2 ist der optische Filter 13, zum Beispiel ein Transmissionsfilter, angeordnet, der für wellenlängenspezifische Lichtstrahlen durchlässig ist. Es ist somit möglich, mehrere Komponenten in einem Messgas mithilfe der modularen Strahlungsdetektoren 2, 17 zu bestimmen. Um die Messungen zu verbessern, können die Kammern eine unterschiedliche Lage aufweisen. Zur Bestimmung weiterer Komponenten in einem Messgas ist eine entsprechende Anzahl weiterer Strahlungsdetektoren 17 im Strahlengang des ersten Strahlungsdetektors 2 anzuordnen.

## Patentansprüche

1. Strahlungsdetektor (2) für einen nichtdispersiven Infrarot-Gasanalysator, mit zwei von einem Gehäuse (1) umgebenen und von einem für Infrarotstrahlung durchlässigen und für Gas undurchlässigen Trennelement (7) getrennte Detektorkammern (6), die mit einem strahlungsabsorbierenden Messgas füllbar sind, einem an einer Anlagefläche (8) an einer Außenseite des Gehäuses (1) anbringbaren Aufnahmeelement (9) und einem darin befestigten, einen strömungs- oder drucksensitiven Sensor umfassenden Messsystem (10), wobei jede Detektorkammer (6) durch einen in dem Gehäuse (1) verlaufenden gasoffenen Kanal (11) mit dem Messsystem (10) pneumatisch verbunden ist, **dadurch gekennzeichnet, dass** das Gehäuse (1) des Strahlungsdetektors (2) modular ausgestaltet ist und ein den Kanal (11), das Trennelement (7) und das in dem Aufnahmeelement (9) befestigte Messsystem (10) umfassendes Grundelement (3) und ein erstes und ein zweites jeweils mit dem Grundelement (3) verbindbares und jeweils eine Detektorkammer (6) umschließendes Außenelement (4, 5) umfasst, und dass die Außenelemente (4, 5) im Strahlengang der Infrarotstrahlung liegende Öffnungen aufweisen und die Öffnungen mit einem strahlungsdurchlässigen Fenster (12) gasdicht verschlossen sind, wobei das Aufnahmeelement (9) und das erste und das zweite Außenelement (4, 5) mit dem Grundelement (3) gefügt sind.

2. Strahlungsdetektor (2) nach Anspruch 1, **dadurch gekennzeichnet, dass** das Aufnahmeelement (9) aus einem schweißfähigen Material besteht und das Messsystem (10) in das Aufnahmeelement (9) eingeschweißt ist.

3. Strahlungsdetektor (2) nach einem der Ansprüche 1 oder 2, **dadurch gekennzeichnet, dass** das Trennelement (7) als Infrarotstrahlung durchlässiges und für Gas undurchlässiges Fenster ausgestaltet ist.

4. Strahlungsdetektor (2) nach einem der vorhergehenden Ansprüche, **dadurch gekennzeichnet, dass** das Trennelement (7) mit dem Grundelement (3) und die Fenster (12) mit den Außenelementen (4, 5) über einen Zwischenrahmen gasdicht verbunden sind.

5. Strahlungsdetektor (2) nach einem der vorhergehenden Ansprüche, **dadurch gekennzeichnet, dass** mindestens ein Fenster (12) ein mit einer strahlungsreflektierenden Schicht oder ein mit einer strahlungsreflektierenden Scheibe versehenes Fenster ist.

6. Strahlungsdetektor (2) nach einem der vorhergehenden Ansprüche, **dadurch gekennzeichnet, dass** die Außenelemente (4, 5) unterschiedlich lang ausgestaltet sind, so dass die Detektorkammern (6) in axialer Richtung unterschiedliche Längen aufweisen.

7. Strahlungsdetektor (2) nach einem der vorhergehenden Ansprüche, **dadurch gekennzeichnet, dass** zumindest ein Außenelement (4, 5) eine im Strahlengang der Infrarotstrahlung liegende und von den Detektorkammern (6) gasdicht getrennte Filterkammer (14) aufweist, die mit einem Filtergas gefüllt ist.

8. Strahlungsdetektor (2) nach einem der vorhergehenden Ansprüche, **dadurch gekennzeichnet, dass** das Aufnahmeelement (9) und das erste und das zweite Außenelement (4, 5) mit dem Grundelement (3) durch Kleben, Schweißen oder Löten gefügt sind.

9. Strahlungsdetektor (2) nach einem der vorhergehenden Ansprüche, **dadurch gekennzeichnet, dass** das Grundelement (3) und das erste und/oder das zweite Außenelement (4, 5) aus Aluminium bestehen.

10. Strahlungsdetektor (2) nach Anspruch 9, **dadurch gekennzeichnet, dass** an dem Trennelement (7) oder einem strahlungsdurchlässigen Fenster (12) ein im Strahlengang der Infrarotstrahlung liegender optischer Filter (13) angebracht ist.

11. Nichtdispersiver Infrarot-Gasanalysator umfassend einen Strahlungsdetektor (2) nach den Ansprüchen 1 bis 10, **dadurch gekennzeichnet, dass** mindestens ein weiterer Strahlungsdetektor (17) hinter dem ersten Strahlungsdetektor (2) angeordnet ist, der mit dem gleichen oder einem weiteren Messgas gefüllt ist.

12. Nichtdispersiver Infrarot-Gasanalysator nach Anspruch 11, **dadurch gekennzeichnet, dass** zwischen dem ersten und dem weiteren Strahlungsdetektor (2, 17) ein optischer Filter (13) angeordnet ist.

## Claims

1. Radiation detector (2) for a non-dispersive infrared gas analyser, comprising two detector chambers (6) which are surrounded by a housing (1) and separated by a separating element (7) that is permeable to infrared radiation and impermeable to gas, which detector chambers can be filled with a radiation-absorbing measuring gas, comprising a receiving element (9) which can be attached to a contact surface (8) on an outer face of the housing (1), and comprising a measuring system (10) which is fastened in said receiving element and comprises a flow-sensitive or pressure-sensitive sensor, each detector chamber (6) being pneumatically connected to the measuring system (10) by means of a channel (11) that extends in the housing (1) and is open to gas, **characterised in that** the housing (1) of the radiation detector (2) is constructed in a modular manner and comprises a base element (3) comprising the channel (11), the separating element (7) and the measuring system (10) fastened in the receiving element (9), and a first and a second outer element (4, 5) which can in each case be connected to the base element (3) and in each case enclose a detector chamber (6), and **in that** the outer elements (4, 5) comprise openings located in the beam path of the infrared radiation, and the openings are sealed in a gas-tight manner by means of a radiolucent window (12), the receiving element (9) and the first and second outer elements (4, 5) being joined to the base element (3).

2. Radiation detector (2) according to claim 1, **characterised in that** the receiving element (9) is made of a weldable material and the measuring system (10) is welded into the receiving element (9).

3. Radiation detector (2) according to either claim 1 or claim 2, **characterised in that** the separating element (7) is designed as a window that is permeable to infrared radiation and impermeable to gas.

4. Radiation detector (2) according to any of the preceding claims, **characterised in that** the separating element (7) is connected to the base element (3) and the windows (12) are connected to the outer elements (4, 5) in a gas-tight manner by means of an intermediate frame.

5. Radiation detector (2) according to any of the preceding claims, **characterised in that** at least one window (12) is a window provided with a radioreflective layer or a radioreflective pane.

6. Radiation detector (2) according to any of the preceding claims, **characterised in that** the outer elements (4, 5) are designed to have different lengths, such that the detector chambers (6) have different lengths in the axial direction.

7. Radiation detector (2) according to any of the preceding claims, **characterised in that** at least one outer element (4, 5) comprises a filter chamber (14) that is located in the beam path of the infrared radiation, is separated from the detector chambers (6) in a gas-tight manner and is filled with a filter gas.

8. Radiation detector (2) according to any of the preceding claims, **characterised in that** the receiving element (9) and the first and second outer elements (4, 5) are joined to the base element (3) by means of gluing, welding or soldering.

9. Radiation detector (2) according to any of the preceding claims, **characterised in that** the base element (3) and the first and/or the second outer element (4, 5) are made of aluminium.

10. Radiation detector (2) according to claim 9, **characterised in that** an optical filter (13) located in the beam path of the infrared radiation is attached to the separating element (7) or a radiolucent window (12).

11. Non-dispersive infrared gas analyser comprising a radiation detector (2) according to claims 1 to 10, **characterised in that** at least one additional radiation detector (17) is arranged behind the first radiation detector (2) and is filled with the same or another measuring gas.

12. Non-dispersive infrared gas analyser according to claim 11, **characterised in that** an optical filter (13) is arranged between the first and the additional radiation detector (2, 17).

## Revendications

1. Détecteur de rayonnement (2) pour un analyseur de gaz à infrarouge non dispersif, muni de deux chambres de détection (6) entourées par un boîtier (1) et séparées par un élément de séparation (7) perméable au rayonnement infrarouge et imperméable au gaz, lesquelles chambres peuvent être remplies avec un gaz de mesure absorbant les rayonnements, d'un élément de réception (9) pouvant être installé sur une surface d'appui (8) sur un côté extérieur du boîtier (1), et d'un système de mesure (10) fixé dedans comprenant un capteur sensible au flux ou à la pression, chaque chambre de détection (6) étant raccordée de façon pneumatique au système de mesure (10) par un canal (11) ouvert au gaz s'étendant dans le boîtier (1), **caractérisé en ce que** le boîtier (1) du détecteur de rayonnement (2) est conçu modulaire et comprend un élément de base (3) comprenant le canal (11), l'élément de séparation (7) et le système de mesure (10) fixé dans l'élément de réception (9), et un premier et un deuxième élément extérieur (4, 5) qui peuvent chacun être reliés à l'élément de base (3) et qui entourent chacun une chambre de détection (6), et **en ce que** les éléments extérieurs (4, 5) présentent des ouvertures situées sur le chemin optique du rayonnement infrarouge, lesquelles ouvertures sont fermées de façon étanche au gaz par une fenêtre (12) perméable au rayonnement, l'élément de réception (9) ainsi que le premier et le deuxième élément extérieur (4, 5) étant assemblés à l'élément de base (3).

2. Détecteur de rayonnement (2) selon la revendication 1, **caractérisé en ce que** l'élément de réception (9) est constitué d'un matériau pouvant être soudé et le système de mesure (10) est soudé dans l'élément de réception (9).

3. Détecteur de rayonnement (2) selon l'une des revendications 1 ou 2, **caractérisé en ce que** l'élément de séparation (7) est réalisé sous la forme d'une fenêtre perméable au rayonnement infrarouge et imperméable aux gaz.

4. Détecteur de rayonnement (2) selon l'une des revendications précédentes, **caractérisé en ce que** l'élément de séparation (7) avec l'élément de base (3) et les fenêtres (12) avec les éléments extérieurs (4, 5) sont reliés de manière étanche au gaz par le biais d'un cadre intermédiaire.

5. Détecteur de rayonnement (2) selon l'une des revendications précédentes, **caractérisé en ce qu'**au moins une fenêtre (12) est une fenêtre munie d'une couche réfléchissant le rayonnement ou d'une vitre réfléchissant le rayonnement.

6. Détecteur de rayonnement (2) selon l'une des revendications précédentes, **caractérisé en ce que** les éléments extérieurs (4, 5) sont réalisés de longueurs différentes de sorte que les chambres de détection (6) présentent des longueurs différentes dans la direction axiale.

7. Détecteur de rayonnement (2) selon l'une des revendications précédentes, **caractérisé en ce qu'**au moins un élément extérieur (4, 5) présente une chambre de filtrage (14) qui se trouve dans le chemin optique du rayonnement infrarouge et qui est séparée des chambres de détection (6) de façon étanche au gaz, laquelle chambre de filtrage est remplie d'un gaz filtrant.

8. Détecteur de rayonnement (2) selon l'une des revendications précédentes, **caractérisé en ce que** l'élément de réception (9) ainsi que le premier et le deuxième élément extérieur (4, 5) sont assemblés à l'élément de base (3) par collage, soudage ou brasage.

9. Détecteur de rayonnement (2) selon l'une des revendications précédentes, **caractérisé en ce que** l'élément de base (3) et le premier et/ou le deuxième élément extérieur (4, 5) sont en aluminium.

10. Détecteur de rayonnement (2) selon la revendication 9, **caractérisé en ce qu'**un filtre optique (13) situé dans le chemin optique du rayonnement infrarouge est fixé sur l'élément de séparation (7) ou sur une fenêtre perméable au rayonnement (12).

11. Analyseur de gaz à infrarouge non dispersif comprenant un détecteur de rayonnement (2) selon les revendications 1 à 10, **caractérisé en ce qu'**au moins un détecteur de rayonnement (17) supplémentaire est disposé derrière le premier détecteur de rayonnement (2) et est rempli avec le même gaz ou un autre gaz de mesure.

12. Analyseur de gaz à infrarouge non dispersif selon la revendication 11, **caractérisé en ce qu'**un filtre optique (13) est disposé entre le premier détecteur de rayonnement (2) et le détecteur de rayonnement (17) supplémentaire.
